# EUROPEAN PATENT APPLICATION

(11) **EP 4 563 400 A1**
(43) Date of publication of application: **04.06.2025**
(21) Application number: 24183373.0
(22) Date of filing: 20.06.2024
(51) Int. Cl.: B60L 50/64, B60K 1/04, B60L 50/60, B60L 53/80, H01M 50/244, H01M 50/249, B60S 5/06, B60L 53/30, B60L 3/12, B60L 3/00

(54) **SYSTEM FOR SWAPPING BATTERY PACK IN AN ELECTRIC VEHICLE AND A METHOD THEREOF**

(30) Priority: 30.11.2023 IN 202341081562
(71) Applicant: Mahindra and Mahindra Limited, Chengalpattu, Tamil Nadu 603004 (IN)
(72) Inventor: DEEPAK, Saini, 603004 Chengalpattu (IN); JAYARAJ, Dinesh Chandrasekaran, 603004 Chengalpattu (IN); SARAVANAN, Natarajan, 603004 Chengalpattu (IN); RAJAN, Sundaravadivel, 603004 Chengalpattu (IN)
(74) Representative: Nederlandsch Octrooibureau

(57) **Abstract**

The disclosure herein generally relates to swappable battery pack and more particularly, to a system and method for swapping a battery pack in an electric vehicle. The system (100) includes a mounting assembly (104) mounted on a chassis (10) of the vehicle, and at least one battery pack (102) mounted on the mounting assembly (104). The mounting assembly facilitates linear and rotational movement of the battery pack w.r.t the chassis to allow egress and ingress of the battery pack (102) from a battery mounting space defined in the vehicle. At least two connectors (106C) provided on a mounting platform (106) facilitate connection of the battery pack with the vehicle. The system facilitates ease in accessing the battery pack, allows the battery pack to be removed and placed at different orientations, easy to assemble and operate.

## Description

### TECHNICAL FIELD

The embodiments herein generally relate to swappable battery packs for electric vehicles and more particularly, to a system and method for swapping a battery pack in an electric vehicle.

### BACKGROUND

Generally, electric vehicles are powered by rechargeable battery packs which are connected in the vehicle. The battery pack is securely connected within the vehicle, forming an integral part of the vehicle, and is therefore not easily removable. A user has to charge the battery pack by plugging electric supply to the vehicle, wherein the discharged battery pack is charged through the charging system integrated with the vehicle. Therefore, while the battery is being charged, the electric vehicle cannot be used, limiting the usage of the electric vehicle. In electric vehicles such as electric tractors, where the productivity of the vehicle is crucial, keeping the vehicle idle for charging of the battery pack affects the productivity. Also, in electrical agricultural vehicles, where due to higher power requirement, the capacity of the battery pack is high, a higher capacity battery pack usually requires longer charging time. A longer charging time further affects the performance and productivity of the electric vehicle.

Further, the battery packs contribute to high costs of electric vehicles. Apart from the initial costs, the cost involved in maintaining and replacing a battery pack in a conventional electric vehicle is also high. The high initial cost and recurring cost of the battery pack in electric vehicles such as tractors affects the economic feasibility of the vehicle. The high production cost and maintenance cost of electric tractors may weigh against the environmental benefits, making a user to opt for tractors with combustion engines for their economic feasibility.

Although some vehicles have provision for swapping battery packs in the vehicle, wherein the discharged battery pack is replaced with a charged battery pack, existing electric tractors do not provide for such alternative. A major issue with providing a swappable battery pack in an electric agricultural vehicle is the difficulty in changing the battery pack due to the weight of the battery pack. Another issue is the accessibility of the battery pack for replacement. This makes swapping of the battery pack difficult and cumbersome in electric agricultural vehicles.

Therefore, there exists a need for a system for swapping a battery pack in an electric vehicle which obviates the aforementioned drawbacks.

### OBJECTS

The principal object of embodiments herein is to provide a system for swapping a battery pack in an electric vehicle.

Another object of embodiments herein is to provide the system for swapping a battery pack which facilitates ease in accessing the battery pack for swapping the battery pack in the electric vehicle.

Another object of embodiments herein is to provide the system for swapping a battery pack which allows the battery pack to be removed and placed at different orientations.

Another object of embodiments herein is to provide a method for swapping a battery pack in an electric vehicle.

These and other objects of embodiments herein will be better appreciated and understood when considered in conjunction with following description and accompanying drawings. It should be understood, however, that the following descriptions, while indicating embodiments and numerous specific details thereof, are given by way of illustration and not of limitation. Many changes and modifications may be made within the scope of the embodiments herein without departing from the spirit thereof, and the embodiments herein include all such modifications.

### BRIEF DESCRIPTION OF DRAWINGS

The embodiments are illustrated in the accompanying drawings, throughout which like reference letters indicate corresponding parts in various figures. The embodiments herein will be better understood from the following description with reference to the drawings, in which:
Fig. 1 is an exploded view of a system for swapping a battery pack in an electric vehicle, according to embodiments as disclosed herein;
Fig. 2 is an isometric view of the system for swapping a battery pack in an electric vehicle, according to embodiments as disclosed herein;
Fig. 3a is a top view of a chassis of the electric vehicle with mounting brackets of the system for swapping a battery pack, according to embodiments as disclosed herein;
Fig. 3b is an isometric view of the chassis of the electric vehicle with mounting brackets of the system for swapping a battery pack, according to embodiments as disclosed herein;
Fig. 4 is an isometric view of a mounting platform of the system for swapping a battery pack in an electric vehicle, according to embodiments as disclosed herein; and
Fig. 5 is a top view of the mounting platform assembly, according to embodiments as disclosed herein;
Fig. 6a is an isometric view of the system for swapping a battery pack depicting an initial step of swapping the battery pack, according to embodiments as disclosed herein;
Fig. 6b is an isometric view of the system for swapping a battery pack depicting the battery pack in a first orientation, according to embodiments as disclosed herein;
Fig. 6c is an isometric view of the system for swapping a battery pack depicting the battery pack in a second orientation, according to embodiments as disclosed herein;
Fig. 6d is an isometric view of the system for swapping a battery pack depicting a removal of the battery pack, according to embodiments as disclosed herein;
Fig. 7A is a flowchart depicting a method for swapping a battery pack in an electric vehicle, according to embodiments as disclosed herein; and
Fig. 7B is a flowchart depicting the method for swapping a battery pack in an electric vehicle, according to another embodiment as disclosed herein.

### DETAILED DESCRIPTION

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

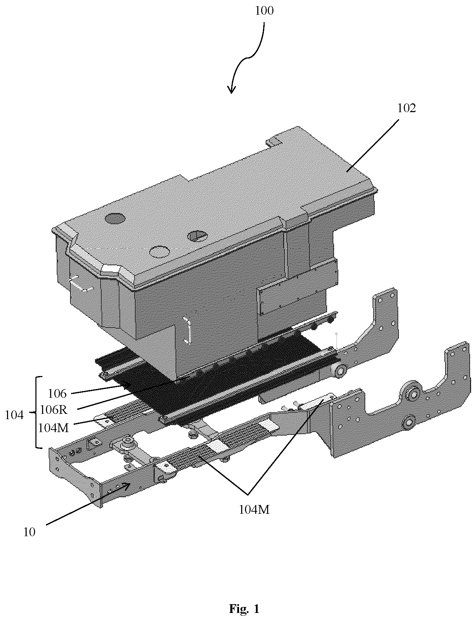

The embodiments herein achieve a system for swapping a battery pack in an electric vehicle. Further, embodiments herein achieve the system for swapping a battery pack which facilitates ease in accessing the battery pack for swapping the battery pack in the electric vehicle. Furthermore, embodiments herein achieve the system for swapping a battery pack which allows the battery pack to be removed and placed at different orientations. Additionally, embodiment herein achieve a method for swapping a battery pack in an electric vehicle. Referring now to the drawings Figs. 1 through 7B, where similar reference characters denote corresponding features consistently throughout the figures, there are shown embodiments.

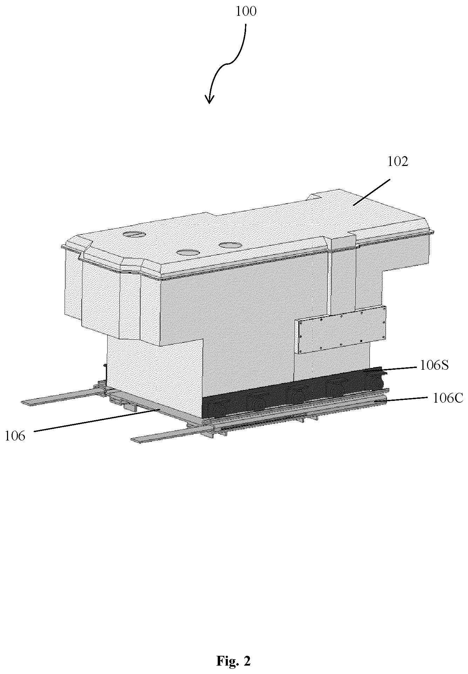

Fig. 1 depicts an exploded view of a system (100) for swapping a battery pack (102) in an electric vehicle, according to embodiments as disclosed herein. Fig. 2 depicts an isometric view of the system (100) for swapping the battery pack (102), according to embodiments disclosed herein. The system (100) includes a mounting assembly (104) adapted to be mounted on a chassis (10) of the electric vehicle, and at least one battery pack (102) configured to be mounted on the mounting assembly (104). For the purpose of this description and ease of understanding, the system (100) is explained herein with below reference to an electric tractor. However, it is also within the scope of the invention to use/practice the components of the system (100) for any other electric vehicle without otherwise deterring the intended function of the system (100) as can be deduced from the description and corresponding drawings. The mounting assembly (104) is configured to securely hold the at least one battery pack (102) and facilitate the mounting of the at least one battery pack (102) on the chassis (10) of the vehicle. Further, the mounting assembly (104) is configured to facilitate linear movement and rotational movement of the at least one battery pack (102) with respect to the chassis (10) of the vehicle. Furthermore, the mounting assembly (104) is configured to facilitate connection of the at least one battery pack (102) with the vehicle. The mounting assembly (104) is also configured to allow the at least one battery pack (102) to egress and ingress a battery mounting space (not shown) defined in the vehicle. The mounting assembly (104) includes at least two mounting brackets (104M), a mounting platform (106), and a linear and rotational movement mechanism (not shown).

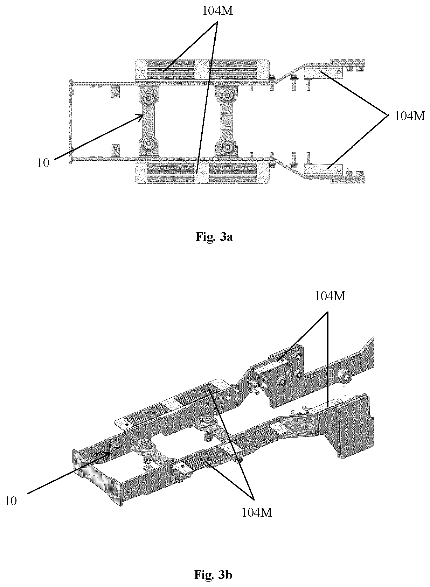

Fig. 3a and Fig. 3b respectively depict a top view and an isometric view of the chassis of the electric vehicle with mounting brackets (104M) of the system (100) for swapping the battery pack (102), according to embodiments as disclosed herein. Each of the at least two mounting brackets (104M) is configured to be connected with the chassis (10) of the vehicle. The at least two mounting brackets (104M) are adapted to facilitate mounting of the mounting platform (106) on the chassis (10) of the vehicle. For the purposes of this description and ease of understanding, the mounting assembly (104) is considered to include four mounting brackets (104M), wherein each of the four mounting brackets (104M) is connected with the chassis (10) of the vehicle. In an embodiment, each of the at least two mounting brackets (104M) is connected with the chassis (10) with any one of a bolting means and welding means.

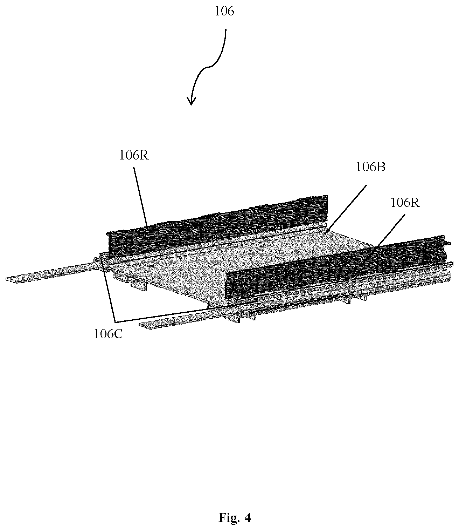

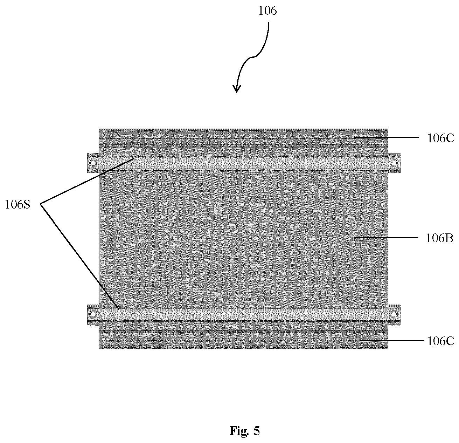

As shown in Fig. 2, the mounting platform (106) is adapted to securely receive the at least one battery pack (102). For the purposes of this description and ease of understanding the battery pack (102) is considered to be attached with the mounting platform (106), wherein the mounting platform (106) is configured to be dismounted from the chassis (10) of the vehicle when the battery pack (102) is removed from the vehicle for swapping. However, it is within the scope of this invention to have the battery pack (102) removably mounted on the mounting platform (106), wherein the battery pack (102) is dismounted from the mounting platform (106) when the battery pack (102) is removed from the vehicle for swapping. Fig. 4 is an isometric view of the mounting platform (106), according to an embodiment of the invention as disclosed herein. Fig. 5 is a top view of the mounting platform (106), according to an embodiment of the invention as disclosed herein. As shown in Fig. 5, the mounting platform (106) includes at least two securing members (106S). Each of the at least two securing members (106S) is provided on a base (106B) of the mounting platform (106). The at least two securing members (106S) are disposed in parallel to each other across a length of the mounting platform (106), extending outwards from the base (106B) of the mounting platform (106). Each of the at least two securing members (106S) is configured to securely hold the at least one battery pack (102) on the mounting platform (106) and facilitate the mounting of the mounting platform (106) on the chassis (10) through the at least two mounting brackets (104M). In an embodiment, the mounting platform (106) is connected with the at least two mounting brackets (104M) through securing means. Further, each of the at least two securing members (106S) is adapted to prevent the at least one battery pack (102) from vibrating when the vehicle is operating. The mounting platform (106) has at least two connectors (106C) integrated with the base (106B) of the mounting platform (106). Each of the at least two connectors (106C) is adapted to facilitate electrical connectivity of the at least one battery pack (102) with the vehicle. Furthermore, each of the at least two connectors (106C) is adapted to be flexible and withstand a load capacity of up to 300kg.

As shown in Fig. 4, the mounting assembly (104) includes at least two support members (106R). Each of the at least two support members (106R) is adapted to be received along a respective longitudinal edge of the mounting platform (106). The at least two support members (106R) are configured to allow ease in egress and ingress of the battery pack (102) from the battery mounting space. The at least two support members (106R) are also adapted to hold the battery pack (102) on the mounting platform (106) and prevent vibration of the battery pack (102) during operation of the vehicle. For the purposes of this description and ease of understanding, each of the at least two support members (106R) are considered to be attached to a respective vertical face of the battery pack towards a bottom end of the battery pack (as shown in Fig. 1).

The linear and rotational movement mechanism is adapted to be operatively coupled with the mounting platform (106) and configured to facilitate linear movement and rotational movement of the mounting platform (106) with respect to the chassis (10) of the vehicle to allow the mounting platform (106) to egress and ingress the battery mounting space. For the purpose of this description and ease of understanding, the linear and rotational movement mechanism is considered to be a unitary mechanism such as a hydraulic mechanism adapted to facilitate both linear and rotational movement of the mounting platform (106) with respect to the chassis (10) of the vehicle. However, it is within the scope of this invention to have a separate mechanism for linear movement such as but not limited to a sliding arrangement, a linear actuator, a conveyor belt, and a gear and shaft arrangement; and a separate mechanism for rotational movement such as but not limited to a rotatory bearing assembly, a rotary actuator, a gear assembly, or any other rotatory mechanism, without otherwise deterring from the intended function of the linear and rotational movement mechanism as can be deduced from the description.

Further, the at least one battery pack (102) is configured to have an integrated battery management system (BMS). The BMS is configured to detect mounting and dismounting of the at least one battery pack (102) from the battery mounting space in the vehicle. The BMS is also configured to communicate the mounting and dismounting of the at least one battery pack (102) to a control unit of the vehicle.

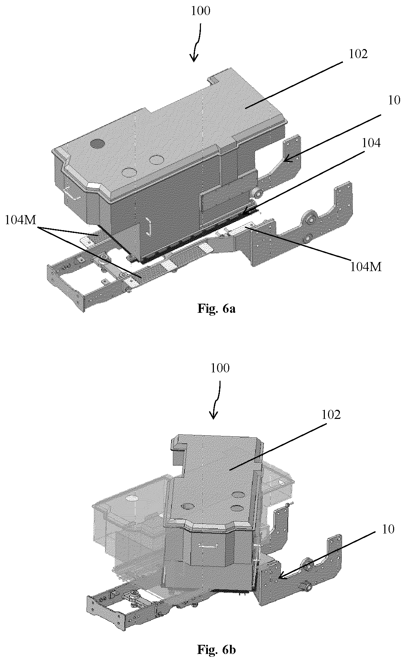

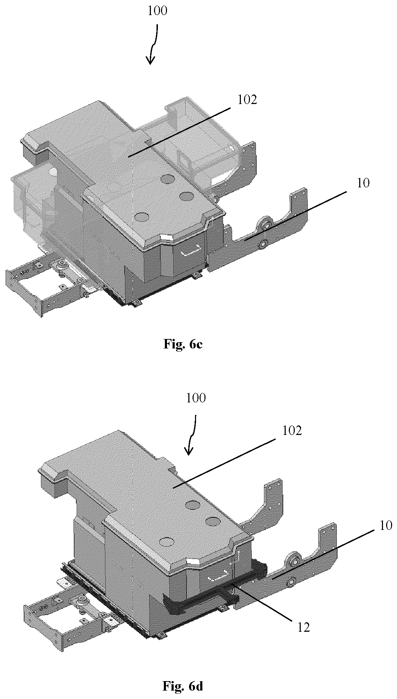

As a non-limiting example, the battery pack (102) is adapted to be mounted in the battery mounting space defined in a front hood area of an electric tractor, wherein the mounting assembly (104) is mounted on the chassis (10) of the electric tractor on a front portion of the chassis (10) in the front hood area. To swap a discharged battery pack with a charged battery pack, the user needs to open the front hood of the electric tractor. To dismount the battery pack from the front hood area, the user moves the mounting platform (106) of the mounting assembly (104) outwards from the front hood area, allowing the battery pack (102) to egress the battery mounting space. Referring to Figs. 6b, 6c, and 6d, depending on a position of an external tool/ machinery (12), the mounting platform (106) can be rotated to a desired orientation (as shown in Fig. 6b and Fig. 6c) through the linear and rotational movement mechanism, wherein the battery pack (102) along with the mounting platform (106) is dismounted from the chassis (10) of the vehicle by applying external force using the tool/ machinery (12). The charged battery pack (102) with the mounting platform (106) is placed on the chassis (10) of the vehicle through the tool/ machinery (12), and the mounting platform (106) is rotated back to its initial orientation. To place the battery pack (102) into the battery mounting space, the mounting platform (106) is pushed inwards into the front hood area, wherein the two connectors (106C) provided on the mounting platform (106) ensure electrical connectivity of the battery pack (102) with the electric tractor.

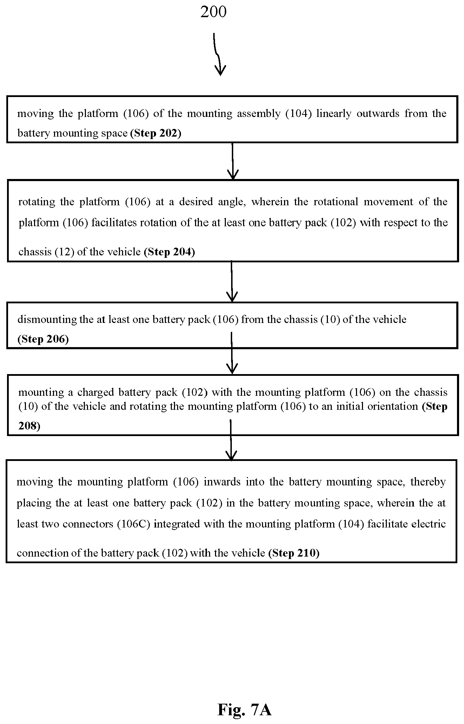

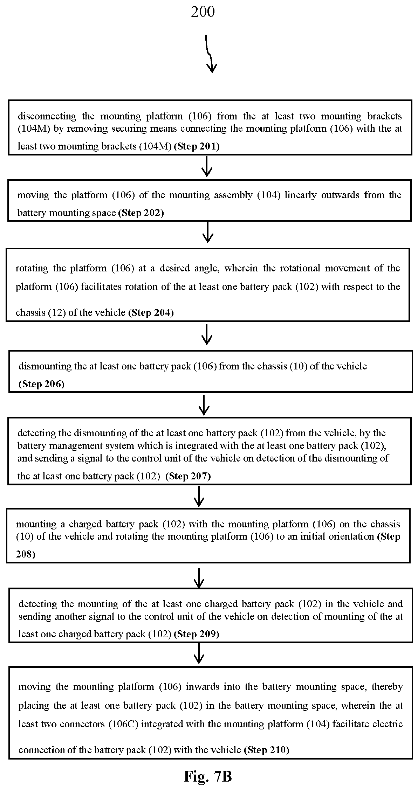

Fig. 7A is a flowchart depicting a method (200) for swapping a battery pack in an electric vehicle, according to an embodiment of the invention as disclosed herein. Fig. 7B is a flowchart depicting the method (200) for swapping a battery pack in an electric vehicle, according to another embodiment of the invention as disclosed herein. The method (200) includes moving the mounting platform (106) of the mounting assembly (104) linearly outwards from the battery mounting space, at step (202). Further, as shown in Figs. 6b and 6c, the method (200) includes, at step (204), rotating the mounting platform (106) at a desired angle, wherein the rotational movement of the mounting platform (106) facilitates rotation of the at least one battery pack (102) with respect to the chassis (10) of the vehicle. Furthermore, as shown in Fig. 6d, the method (200) includes dismounting the at least one battery pack (102) from the chassis (10) of the vehicle, at step (206). In an embodiment, the battery pack (102) along with the mounting platform (106) is dismounted from the chassis (10) of the vehicle using an external force. At step (208), the method (200) includes mounting a charged battery pack (102) along with the mounting platform (106) on the chassis (10) of the vehicle and rotating the mounting platform (106) to the initial orientation. Moreover, at step (210), the method (200) includes moving the mounting platform (106) inwards into the battery mounting space, placing the at least one battery pack (102) in the battery mounting space, wherein the at least two connectors (106C) of the mounting platform (106) facilitate electric connection of the battery pack (102) with the vehicle.

Referring to Fig. 7B, in an embodiment, at step (201), the method (200) includes disconnecting the mounting platform (106) from the at least two mounting brackets (104M) by removing securing means connecting the mounting platform (106) with the at least two mounting brackets (104M) (as shown in Fig. 6a). At step (202), the method (200) includes pushing the at least one battery pack (102) inwards, wherein the linear and rotational movement mechanism is configured to displace the mounting platform (106) outwards when the at least one battery pack (102) is pushed inwards, allowing the at least one battery pack (102) to egress the battery mounting space. At step (207), the method (200) includes detecting the dismounting of the at least one battery pack (102) from the vehicle, by the battery management system which is integrated with the at least one battery pack (102), and sending a signal to the control unit of the vehicle on detection of the dismounting of the at least one battery pack (102). The method (200) also includes, detecting the mounting of the at least one charged battery pack (102) in the vehicle and sending another signal to the control unit of the vehicle on detection of mounting of the at least one charged battery pack (102), at step (209). The various actions in the method (200) may be performed in the order presented, in a different order or simultaneously. Further, in some embodiments, some actions listed in Fig. 7A and Fig. 7B may be omitted.

The technical advantages of the system (100) and the method (200) for swapping a battery pack in an electric vehicle are as follows. Ease in accessing the battery pack for swapping, ease in mounting and dismounting the battery pack in different orientation, ease of assembly and operation, and robustness in swapping a heavy weight battery pack.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of embodiments, those skilled in the art will recognize that the embodiments herein can be practiced with modifications within the spirit and scope of the embodiments as described herein.

## Claims

1. A system (100) for swapping a battery pack (102) in an electric vehicle, said system (100) comprising:
a mounting assembly (104) adapted to be mounted on a chassis (10) of the vehicle; and
at least one battery pack (102) configured to be mounted on the mounting assembly (104),
wherein,
said mounting assembly (104) is configured to:
facilitate linear and rotational movement of said at least one battery pack (102) with respect to the chassis (10) of the vehicle, allowing said at least one battery pack (102) to egress and ingress a battery mounting space defined in the vehicle; and
facilitate connection of said at least one battery pack (102) with the vehicle.

2. The system (100) as claimed in claim 1, wherein said mounting assembly (104) comprises:
a mounting platform (106) adapted to securely receive said at least one battery pack (102);
a linear and rotational movement mechanism operatively coupled with said mounting platform (106), said linear and rotational movement mechanism configured to:
facilitate linear movement of said mounting platform (106) with respect to the chassis (10) of the vehicle to allow said mounting platform (106) to egress and ingress the battery mounting space; and
facilitate rotational movement of said mounting platform (106) with respect to the chassis (10) of the vehicle.

3. The system as claimed in claim 2, wherein said mounting assembly (104) comprises at least two mounting brackets (104M), wherein each of said at least two mounting brackets (104M) is adapted to be connected with the chassis (10) of the vehicle to facilitate mounting of said mounting platform (106) on the chassis (10) of the vehicle.

4. The system (100) as claimed in claim 3, wherein said mounting platform (106) has at least two securing members (106S) provided on a base (106B) of the mounting platform (106), each of said at least two securing members (106S) configured to securely hold the at least one battery pack (102) on the mounting platform (106) and facilitate the mounting of said mounting platform (106) on the chassis (10) of the vehicle through said at least two mounting brackets (104M).

5. The system (100) as claimed in claim 4, wherein each of said at least two securing members (106S) is disposed parallel to each other across a length of said mounting platform (106), extending outwards from a base (106B) of said mounting platform (106).

6. The system (100) as claimed in claim 2, wherein said mounting platform (104) has at least two connectors (106C) integrated with a base (106B) of said mounting platform (106), wherein each of said at least two connectors (106C) is adapted to facilitate electrical connectivity of said battery pack (102) with the vehicle.

7. The system (100) as claimed in claim 2, wherein said mounting assembly (104) comprises at least two support members (106R), wherein each of said at least two support members (106R) is adapted to be received along a respective longitudinal edge of said mounting platform (106), each of said at least two support members (106R) configured to:
facilitate ease in egress and ingress of said at least one battery pack (102) from the battery mounting space;
hold said at least one battery pack (102) on said mounting platform (106) and prevent vibration of said at least battery pack (102) during operation of the vehicle.

8. The system (100) as claimed in claim 7, wherein each of said at least two support members (106R) is adapted to be attached to a respective vertical face of said at least one battery pack (102) towards a bottom end of said at least one battery pack (102).

9. The system (100) as claimed in claim 2, wherein the linear and rotational movement mechanism is configured to slide said mounting platform (106) linearly outwards when said at least one battery pack (102) is pushed inwards for egress of said at least one battery pack (102) from the battery mounting space in the vehicle.

10. The system as claimed in claim 2, wherein said mounting platform (106) is adapted to be connected with said at least one battery pack (102) such that said mounting platform (106) is dismounted from the chassis (10) of the vehicle when said at least one battery pack (102) is dismounted from the chassis (10) of the vehicle for swapping.

11. The system (100) as claimed in claim 1, wherein said at least one battery pack (102) has an integrated battery management system, wherein the battery management system is configured to:
detect mounting and dismounting of said at least one battery pack (102) from the battery mounting space in the vehicle; and
communicate the mounting and dismounting of the at least one battery pack (102) to a vehicle control unit.

12. A method (200) for swapping a battery pack (102) in an electric vehicle, said method (200) comprising:
moving a mounting platform (106) of a mounting assembly (104) mounted on a chassis (10) of the vehicle, linearly outwards from a battery mounting space, wherein at least one battery pack (102) is mounted on said mounting platform (106), and wherein a linear and rotational movement mechanism of said mounting assembly (104) facilitates a linear movement of said mounting platform (106) to allow said at least one battery pack (102) to egress and ingress the battery mounting space;
rotating said mounting platform (106) to a required orientation, wherein the linear and rotational movement mechanism of said mounting assembly (104) facilitates rotation of said mounting platform (106) with respect to the chassis (10) of the vehicle;
dismounting said at least one battery pack (102) from said mounting platform (106);
mounting a charged at least one battery pack (102) on said mounting platform (106);
rotating said mounting platform (106) to an initial orientation; and
moving said mounting platform (106) inwards into the battery mounting space to place said at least one battery pack (102) in the battery mounting space, wherein at least two connectors (106C) of said mounting platform (106) facilitate electric connection of said at least one battery pack (102) with the vehicle.

13. The method (200) as claimed in claim 12, wherein said method comprises disconnecting mounting platform (106) from the chassis (10) of the vehicle by removing securing means connecting said mounting platform (106) with at least two mounting brackets (104M) of said mounting assembly (104).

14. The method (200) as claimed in claim 12, wherein said method comprises detecting, by a battery management system integrated with said at least one battery pack (102), the dismounting of said at least one battery pack (102) from the vehicle and sending a signal to a control unit of the vehicle; and detecting the mounting of said at least one charged battery pack (102) in the vehicle and sending another signal to the control unit of the vehicle.
